# FASCICULE DE BREVET EUROPEEN

(11) **EP 4 138 365 B1**
(45) Date de publication et mention de la délivrance du brevet: **01.01.2025**
(21) Numéro de dépôt: 21191623.4
(22) Date de dépôt: 17.08.2021
(51) Int. Cl.: H04L 51/23

(54) **PROCÉDÉ DE GESTION DE LA LIVRAISON DE MESSAGES DANS UNE INFRASTRUCTURE INFORMATIQUE ET INFRASTRUCTURE INFORMATIQUE ASSOCIÉE**
VERFAHREN ZUR VERWALTUNG DER NACHRICHTENZUSTELLUNG IN EINER IT-INFRASTRUKTUR UND ENTSPRECHENDE IT-INFRASTRUKTUR
METHOD FOR MANAGING THE DELIVERY OF MESSAGES IN A COMPUTER INFRASTRUCTURE AND ASSOCIATED COMPUTER INFRASTRUCTURE

(43) Date de publication de la demande: 22.02.2023
(73) Titulaire: BULL SAS, 78340 Les Clayes-sous-Bois (FR)
(72) Inventeur: GERPHAGNON, Jean-Olivier, 38450 Vif (FR)
(74) Mandataire: Cabinet Camus Lebkiri

(56) Documents cités:
- EP-A1- 3 471 338
- WO-A1-2009/052428
- US-B1- 10 742 732

## Description

### DOMAINE TECHNIQUE DE L'INVENTION

Le domaine technique de l'invention est celui des infrastructures informatiques et plus particulièrement celui de la gestion de la livraison de messages dans les infrastructures informatique.

La présente invention concerne un procédé de gestion de la livraison de messages dans une infrastructure informatique. La présente invention concerne également une infrastructure informatique avec une gestion de la livraison de messages.

### ARRIERE-PLAN TECHNOLOGIQUE DE L'INVENTION

Dans les infrastructures informatiques actuelles, chaque message est envoyé d'un composant émetteur vers un serveur destinataire chargé de retransmettre le message ou de le stocker pour une analyse ultérieure.

Pour s'assurer que le message a bien été reçu par le serveur destinataire, il est courant de mettre en place un mécanisme d'acquittement consistant pour le composant émetteur, à émettre en boucle le message tant qu'il n'a pas reçu de message de confirmation de la réception du message par le serveur destinataire.

Cependant, un tel mécanisme n'est pas compatible avec les infrastructures informatiques complexes dans lesquelles plusieurs millions de messages sont échangés en continu, la mise en place du mécanisme d'acquittement multipliant le nombre de messages envoyés à chaque serveur destinataire, ce qui crée une file d'attente pouvant entraîner la défaillance du serveur destinataire saturé. Dans l'art antérieure, EP 3 471 338 fournit un exemple d'identification des messages en calculant un hachage unique pour éviter leur duplication, ainsi que la possibilité de multidiffuser des messages comprenant des horodatages.

Il n'existe donc actuellement aucun moyen de garantir la bonne réception de chaque message dans une infrastructure informatique sans dégrader son niveau de performance, cette absence de garantie est d'autant plus problématique dans le cas des messages de log utilisés pour le diagnostic de l'infrastructure informatique.

Il existe donc un besoin de garantir la livraison de chaque message dans une infrastructure informatique quelle que soit sa taille, tout en conservant un niveau de performance acceptable.

### RESUME DE L'INVENTION

L'invention offre une solution aux problèmes évoqués précédemment, en permettant de garantir la bonne réception de chaque message au sein d'une infrastructure informatique sans dégrader notablement son niveau de performance.

Un premier aspect de l'invention concerne un procédé de gestion de la livraison de messages dans une infrastructure informatique, selon la revendication 1.

Grâce à l'invention, chaque message à livrer est dupliqué et un duplicata du message est envoyé à chaque serveur d'une pluralité de serveurs destinataires. Le message étant envoyé à plusieurs serveurs destinataires, la probabilité qu'il ne soit pas reçu, par exemple à cause d'une défaillance d'un serveur destinataire, est donc considérablement diminué par rapport à l'art antérieur où le message est envoyé à un unique serveur destinataire, et ceci sans nécessité la mise en place d'un mécanisme d'acquittement.

Pour éviter que plusieurs duplicatas d'un même message soient stockés ou retransmis dans l'infrastructure informatique et donc qu'un même message soit considéré comme plusieurs messages indépendants identiques ce qui pourrait être interprété comme une défaillance dans l'infrastructure informatique, chaque serveur ayant reçu le message calcule une signature propre au message, identique pour chaque serveur et l'envoie à un composant de synchronisation. Pour chaque signature reçue, le composant de synchronisation interroge une base de données de signatures pour savoir si la signature est stockée dans la base de données. Si la signature n'est pas stockée dans la base de données, le composant de synchronisation stocke la signature reçue dans la base de données et requiert le stockage ou la retransmission du duplicata associé à la signature. Si la signature est stockée dans la base de données, un duplicata du message a donc déjà été stocké ou retransmis et le composant de synchronisation requiert donc la suppression du duplicata associé à la signature.

L'invention permet donc de garantir la livraison de chaque message à livrer sans multiplier considérablement le nombre de messages échangés dans l'infrastructure informatique, et donc sans dégrader de manière importante le niveau de performance de l'infrastructure informatique.

Outre les caractéristiques qui viennent d'être évoquées dans le paragraphe précédent, le procédé selon l'invention peut présenter une ou plusieurs caractéristiques complémentaires parmi les suivantes, considérées individuellement ou selon toutes les combinaisons techniquement possibles.

Selon une variante de réalisation, chaque message à livrer est horodaté.

Ainsi, deux messages identiques émis à des instants distincts sont assurés d'avoir des signatures différentes.

Selon une variante de réalisation compatible avec la variante de réalisation précédente, chaque message à livrer est un message relatif à un événement ayant eu lieu dans l'infrastructure informatique.

Selon une variante de réalisation compatible avec les variantes de réalisation précédentes, l'étape de calcul de la signature est réalisée à l'aide d'un algorithme de hachage.

Ainsi, l'unicité de la signature est assurée pour un message donné.

Selon une variante de réalisation compatible avec les variantes de réalisation précédentes, le procédé selon l'invention comprend en outre, à réception de la consigne de stockage par le serveur, une étape de stockage par le serveur, du message reçu sur un dispositif de stockage de l'infrastructure informatique.

Selon une variante de réalisation compatible avec les variantes de réalisation précédentes, le procédé selon l'invention comprend en outre, à réception de la consigne de transmission par le serveur, une étape de transmission par le serveur du message reçu à un composant tiers de l'infrastructure informatique.

Selon une variante de réalisation compatible avec les variantes de réalisation précédentes, le procédé selon l'invention comprend en outre, à réception de la consigne de suppression par le serveur, une étape de suppression par le serveur, du message reçu et de la signature calculée.

Selon une variante de réalisation compatible avec les variantes de réalisation précédentes, le procédé selon l'invention comprend en outre une étape d'effacement d'au moins une partie de la base de données de signatures à intervalle régulier.

Ainsi, il est possible d'utiliser un algorithme de hachage simple pour calculer les signatures, c'est-à-dire ultra-rapide mais qui présente l'inconvénient de générer des duplicatas dans des délais relativement courts, de l'ordre de la journée. De plus, la base de données de signatures est alors de taille faible, ce qui permet d'accélérer la vérification de la première condition, puisque moins il y a d'entrées dans la base de données de signatures, plus la vérification est rapide.

Un deuxième aspect de l'invention concerne une infrastructure informatique avec une gestion de la livraison de messages selon la revendication 9.

Selon une variante de réalisation, le composant de synchronisation est un serveur distinct de chaque serveur de la pluralité de serveurs destinataires ou comporte pour chaque serveur de la pluralité de serveurs destinataires, un module de synchronisation compris dans le serveur, chaque module de synchronisation étant configuré pour communiquer avec les autres modules de synchronisation du composant de synchronisation.

Selon une variante de réalisation compatible avec la variante de réalisation précédente, l'infrastructure informatique selon l'invention comprend en outre un dispositif de stockage, chaque serveur de la pluralité de serveurs destinataires étant en outre configuré pour stocker la signature calculée sur le dispositif de stockage à réception d'une consigne de stockage envoyée par le composant de synchronisation.

Selon une variante de réalisation compatible avec les variantes de réalisation précédentes, l'infrastructure informatique selon l'invention comprend en outre un composant tiers, chaque serveur de la pluralité de serveurs destinataires étant en outre configuré pour transmettre le message reçu au composant tiers à réception d'une consigne de transmission envoyée par le composant de synchronisation.

Selon une variante de réalisation compatible avec les variantes de réalisation précédentes, chaque serveur de la pluralité de serveurs destinataires étant en outre configuré pour supprimer le message reçu et la signature calculée à réception d'une consigne de suppression envoyée par le composant de synchronisation.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 est un schéma synoptique illustrant l'enchaînement des étapes d'un procédé selon l'invention.
- La figure 2 montre une représentation schématique d'une infrastructure informatique selon l'invention.

### DESCRIPTION DETAILLEE

Sauf précision contraire, un même élément apparaissant sur des figures différentes présente une référence unique.

Un premier aspect de l'invention concerne un procédé de gestion de la livraison de messages dans une infrastructure informatique.

Les messages à livrer peuvent correspondre à l'ensemble des messages échangés au sein de l'infrastructure informatique ou à au moins un type de messages particulier, par exemple les messages relatifs à des événements ayant eu lieu dans l'infrastructure informatique, appelés logs en anglais, ou encore les messages d'alerte.

Quel que soit le type de message, chaque message comporte une information relative à son origine, une information relative à sa destination et un contenu à transmettre.

Chaque message peut comporter en outre une information relative à un horodatage.

Un deuxième aspect de l'invention concerne une infrastructure informatique présentant une gestion de la livraison de messages.

En particulier, l'infrastructure informatique selon l'invention est adaptée à la mise en oeuvre du procédé selon l'invention.

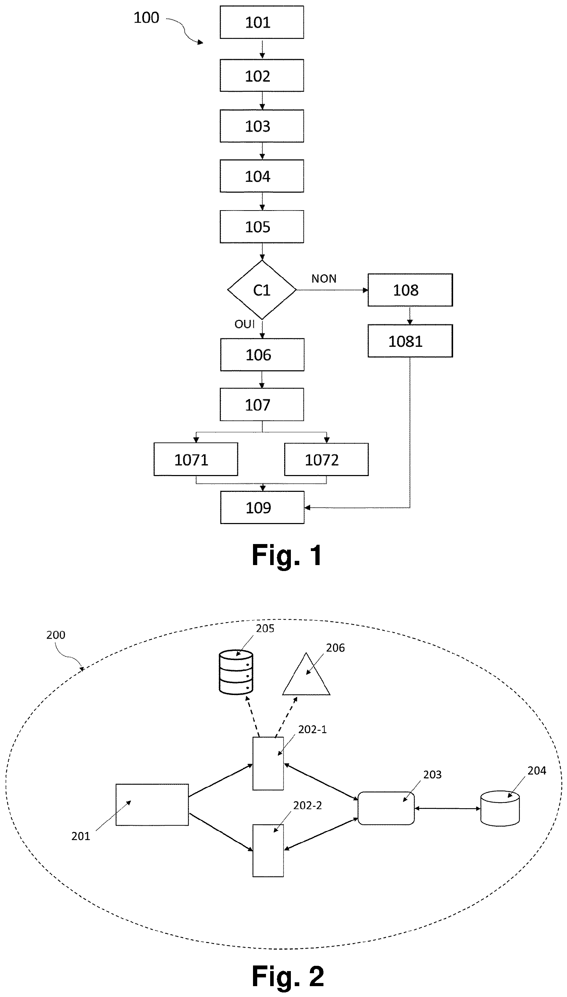

[Fig. 2] montre une représentation schématique d'une infrastructure informatique 200 selon l'invention.

L'infrastructure informatique 200 selon l'invention comporte :
- Au moins un composant émetteur 201 ;
- Au moins une pluralité de serveurs destinataires 202-1, 202-2 ;
- Au moins un composant de synchronisation 203 ;
- Au moins une base de données de signatures 204.

Le composant émetteur 201 peut être tout type de composant capable d'envoyer un message, par exemple un composant matériel tel qu'un serveur, un routeur ou encore un commutateur.

Chaque message à livrer est associé via l'information relative à son origine, à un composant émetteur 201 donné devant envoyer le message à livrer et est associé via l'information relative à sa destination, à une pluralité de serveurs destinataires donnée auxquels le message à livrer doit être envoyé.

Le composant émetteur 201 peut envoyer plusieurs messages à livrer, chacun associés à des pluralités de serveurs destinataire différentes. Par exemple, le composant émetteur 201 peut envoyer un premier message à une première pluralité de serveurs destinataires et un deuxième message à une deuxième pluralité de serveurs destinataires.

La pluralité de serveurs destinataires comporte au moins deux serveurs 202-1, 202-2 et chaque serveur 202-1, 202-2 comporte au moins une mémoire.

Sur la figure 2, la pluralité de serveurs destinataires comporte deux serveurs 202-1, 202-2.

Selon un premier mode de réalisation, le composant de synchronisation 203 est un serveur non compris dans la pluralité de serveurs destinataires et donc non destiné à recevoir les messages à livrer.

Selon un deuxième mode de réalisation, le composant de synchronisation 203 comporte un module de synchronisation par serveur 202-1, 202-2 de la pluralité de serveurs destinataires et chaque module de synchronisation est capable de communiquer avec les autres modules de synchronisation compris dans le composant de synchronisation 203.

Le composant de synchronisation 203 est hautement disponible.

L'infrastructure informatique 200 peut également comporter au moins un dispositif de stockage 205.

Le dispositif de stockage 205 est par exemple destiné au stockage de messages échangés dans l'infrastructure informatique 200.

Le dispositif de stockage 205 comporte par exemple au moins un disque, par exemple un disque de type Non-Volatile Memory Express (NVME) ou encore de type Solid-State Drive (SSD).

L'infrastructure informatique 200 peut également comporter au moins un composant tiers 206 distinct du composant émetteur 201 et des serveurs 202-1, 202-2 de la pluralité de serveurs destinataires.

Le composant tiers 206 est par exemple un serveur destiné à la gestion du stockage de messages dans l'infrastructure informatique 200.

La base de données de signatures 204 est adaptée pour stocker au moins une signature obtenue à partir d'un message.

[Fig. 1] est un schéma synoptique illustrant l'enchaînement des étapes du procédé 100 selon l'invention.

Les étapes du procédé 100 selon l'invention sont réalisées pour chaque message à livrer.

Une première étape 101 du procédé 100 consiste pour le composant émetteur 201 associé au message à livrer, c'est-à-dire devant livrer le message, à envoyer le message à chaque serveur 202-1, 202-2 de la pluralité de serveurs destinataires associée au message à livrer, c'est-à-dire auxquels le message à livrer doit être envoyé.

La première étape 101 comporte donc une sous-étape de duplication du message à livrer pour obtenir autant de duplicatas du message à livrer que de serveurs 202-1, 202-2 dans la pluralité de serveurs destinataires.

L'envoi est réalisé de manière simultanée, c'est-à-dire que chaque duplicata du message à livrer est envoyé simultanément à chaque serveur 202-1, 202-2 de la pluralité de serveurs destinataires.

Une deuxième étape 102 du procédé 100 consiste pour chaque serveur 202-1, 202-2 de la pluralité de serveurs destinataires ayant reçu le message envoyé à la première étape 101, à calculer une signature à partir du message reçu.

A réception du message, chaque serveur 202-1, 202-2 de la pluralité de serveurs destinataires stocke le message reçu dans sa mémoire.

Une signature permet d'identifier de manière unique un message et est donc différente pour chaque message à livrer.

La signature est par exemple calculée en appliquant un algorithme de hachage au message reçu.

L'algorithme de hachage doit être de préférence le plus rapide possible.

L'algorithme de hachage peut avoir recours à une fonction de hachage cryptographique, par exemple de type Message Digest 5 (MD5) ou Secure Hash Algorithm (SHA).

La signature est calculée de la même manière par chaque serveur 202-1, 202-2 de la pluralité de serveurs destinataires ayant reçu le message. Comme chaque serveur 202-1, 202-2 de la pluralité de serveurs destinataires a reçu un duplicata du message, chaque serveur 202-1, 202-2 de la pluralité de serveurs destinataires calcule la même signature lors de la deuxième étape 102, c'est-à-dire que la signature calculée est identique pour chaque serveur 202-1, 202-2 de la pluralité de serveurs destinataires ayant reçu le message.

Une fois la signature calculée, chaque serveur 202-1, 202-2 de la pluralité de serveurs destinataires stocke la signature calculée dans sa mémoire.

Une troisième étape 103 du procédé 100 consiste pour chaque serveur 202-1, 202-2 de la pluralité de serveurs destinataires ayant calculé une signature à la deuxième étape 102, à envoyer la signature calculée au composant de synchronisation 103.

L'envoi est réalisé de manière indépendante par chaque serveur 202-1, 202-2 de la pluralité de serveurs destinataires ayant calculé une signature à la deuxième étape 102.

Une quatrième étape 104 du procédé 100 consiste pour le composant de synchronisation 203 à recevoir chaque signature envoyée à la troisième étape 103.

Comme l'envoi est réalisé de manière indépendante par chaque serveur 202-1, 202-2 de la pluralité de serveurs destinataires à la troisième étape 103, le composant de synchronisation 203 peut recevoir chaque signature envoyée à un instant différent, et donc recevoir les signatures envoyées en décalé.

A réception d'une signature par le composant de synchronisation 203, une cinquième étape 105 du procédé 100 est réalisée pour la signature reçue.

La cinquième étape 105 consiste pour le composant de synchronisation 203 à interroger la base de données de signatures 204 pour tester la vérification d'une première condition C1 relative à la signature reçue.

La première condition C1 est vérifiée si la signature reçue n'est pas stockée dans la base de données de signatures 204.

Au contraire, la première condition C1 n'est pas vérifiée si la signature reçue est stockée dans la base de données de signatures 204.

Si la première condition C1 est vérifiée pour la signature reçue, une sixième étape 106 et une septième étape 107 du procédé 100 sont réalisées.

Si la première condition C1 n'est pas vérifiée pour la signature reçue, une huitième étape 108 est réalisée.

La sixième étape 106 du procédé 100 consiste pour le composant de synchronisation 203 à stocker la signature dans la base de données de signatures 204.

La première condition C1 est donc vérifiée pour la signature reçue en premier par le composant de synchronisation 103 parmi les signatures envoyées par chaque serveur 202-1, 202-2 de la pluralité de serveurs destinataires, c'est-à-dire pour la signature reçue à un premier instant, et non vérifiée pour les signatures reçues après, c'est-à-dire pour chaque signature reçue à un instant postérieur au premier instant, puisque les signatures envoyées sont identiques et que la signature reçue en premier a été stockée dans la base de données de signatures 204 dès que la première condition C1 a été vérifiée.

La septième étape 107 du procédé 100 consiste pour le composant de synchronisation 203 à envoyer une consigne de stockage ou de transmission au serveur 202-1, 202-2 de la pluralité de serveurs destinataires ayant envoyé la signature au composant de synchronisation 203.

La consigne de stockage est un message ordonnant au serveur 202-1 , 202-2 de la pluralité de serveurs destinataires ayant envoyé la signature, de stocker le message sur la base duquel la signature a été calculée dans le dispositif de stockage 205.

La consigne de transmission est un message ordonnant au serveur 202-1, 202-2 de la pluralité de serveurs destinataires ayant envoyé la signature, de transmettre le message sur la base duquel la signature a été calculée au composant tiers 206 de l'infrastructure informatique 200.

La septième étape 107 peut alors être suivie d'une étape 1071 de stockage par le serveur 202-1, 202-2 de la pluralité de serveurs destinataires ayant envoyé la signature, du message reçu sur le dispositif de stockage 205 à réception de la consigne de stockage, ou d'une étape 1072 de transmission par le serveur 202-1, 202-2 de la pluralité de serveurs destinataires ayant envoyé la signature, du message reçu au composant tiers 206.

La huitième étape 108 du procédé 100 consiste pour le composant de synchronisation 203 à envoyer une consigne de suppression au serveur 202-1, 202-2 de la pluralité de serveurs destinataires ayant envoyé la signature au composant de synchronisation 203.

La consigne de suppression est un message ordonnant au serveur 202-1, 202-2 de la pluralité de serveurs destinataires ayant envoyé la signature, de supprimer le message reçu et la signature calculée sur la base du message reçu de sa mémoire.

La huitième étape 108 peut alors être suivie d'une étape 1081 de suppression par le serveur 202-1, 202-2 de la pluralité de serveurs destinataires ayant envoyé la signature, du message reçu et de la signature calculée correspondante.

Le duplicata du message sur la base duquel a été calculée la signature reçue en premier par le composant de synchronisation 103 est alors stocké dans le dispositif de stockage 205 ou retransmis au composant tiers 206 et les duplicatas du message sur la base desquels ont été calculées une signature reçue après, sont supprimés.

Sur la figure 2, la pluralité de serveurs destinataires comporte un premier serveur 202-1 et un deuxième serveur 202-2 qui reçoivent tous les deux un duplicata du message à livrer envoyé par le composant émetteur 201 à la première étape 101.

Le premier serveur 202-1 et le deuxième serveur 202-2 calculent chacun de manière indépendante une signature pour le message reçu à la deuxième étape, la signature calculée par le premier serveur 202-1 étant identique à la signature calculée par le deuxième serveur 202-2, puis envoient chacun de manière indépendante la signature calculée au composant de synchronisation 203 à la troisième étape 103.

On se place dans le cas où la signature envoyée par le premier serveur 202-1 est reçue avant la signature envoyée par le deuxième serveur 202-2.

A réception de la signature envoyée par le premier serveur 202-1, le composant de synchronisation 203 interroge la base de données de signatures 204 qui ne contient pas la signature reçue qui est propre au message.

Le composant de synchronisation 203 stocke alors la signature reçue dans la base de données de signatures 204 à la sixième étape 106 et envoie une consigne de stockage ou de transmission au premier serveur 202-1 à la septième étape 107.

Si le premier serveur 202-1 reçoit une consigne de stockage, le premier serveur 202-1 stocke le message dans le dispositif de stockage 205 à l'étape 1071 et si le premier serveur 202-1 reçoit une consigne de transmission, le premier serveur 202-1 transmet message au composant tiers 206 à l'étape 1072, l'alternative étant représentée par des pointillés sur la figure 2.

A réception de la signature envoyée par le deuxième serveur 202-2, le composant de synchronisation 203 interroge la base de données de signatures 204 qui contient la signature reçue puisqu'identique à la signature envoyée par le premier serveur 202-1.

Le composant de synchronisation 203 envoie donc une consigne de suppression au deuxième serveur 202-2 à la huitième étape 108 et le deuxième serveur 202-2 efface le message reçu et la signature calculée de sa mémoire à l'étape 1081.

Dans le cas où la signature envoyée par le premier serveur 202-1 est reçue en même temps que la signature envoyée par le deuxième serveur 202-2, le composant de synchronisation 203 peut appliquer une règle prédéfinie pour savoir quelle signature reçue il doit traiter en premier.

Par exemple, un numéro différent est attribué à chaque serveur 202-1, 202-2 de la pluralité de serveurs destinataires et la règle prédéfinie consiste à traiter en premier la signature reçue du serveur 202-1, 202-2 de la pluralité de serveurs destinataires associé au numéro le plus élevé parmi les numéros associés aux serveurs 202-1, 202-2 de la pluralité de serveurs destinataires ayant envoyé la signature en même temps.

Le procédé 100 selon l'invention peut également comporter une neuvième étape 109 consistant à effacer au moins une partie de la base de données de signatures 204 à intervalle régulier.

La durée de l'intervalle est par exemple d'une journée, préférentiellement d'une heure. La neuvième étape 109 consiste alors à effacer les entrées de la base de données de signatures 204 stockées dans la base de données de signatures il y a plus d'un jour ou il y a plus d'une heure.

## Revendications

1. Procédé (100) de gestion de la livraison de messages, chaque message étant associé via une information relative à son origine, à un composant émetteur (201) donné devant envoyer le message et est associé via une information relative à sa destination, à une pluralité de serveurs destinataires donnée auxquels le message doit être envoyé, dans une infrastructure informatique (200), **caractérisé en ce qu'**il comporte les étapes suivantes pour chaque message à livrer :
- Envoi (101) simultané du message par un composant émetteur (201) de l'infrastructure informatique (200), à chaque serveur (202-1 , 202-2) d'une pluralité de serveurs destinataires de l'infrastructure informatique (200) ;
- Pour chaque serveur (202-1, 202-2) de la pluralité de serveurs destinataires ayant reçu le message envoyé et ayant stocké le message reçu dans sa mémoire :
∘ Calcul (102) par le serveur (202-1, 202-2), d'une signature propre au message reçu, la signature calculée étant identique pour chaque serveur (202-1, 202-2) ;
∘ Envoi (103) par le serveur (202-1, 202-2), de la signature calculée à un composant de synchronisation (203);
∘ Réception (104) de la signature envoyée et interrogation (105) d'une base de données de signatures (204) par le composant de synchronisation (203) :
▪ Si une première condition (C1) selon laquelle la signature reçue n'est pas stockée dans la base de données de signatures (204) est vérifiée, stockage (106) de la signature reçue dans la base de données de signatures (204) et envoi (107) d'une consigne de stockage ou de transmission du message reçu au serveur (202-1, 202-2) par le composant de synchronisation (203) ;
▪ Sinon, envoi (108) par le composant de synchronisation (203) d'une consigne de suppression du message reçu et de la signature calculée au serveur (202-1, 202-2).

2. Procédé (100) selon la revendication 1, dans lequel chaque message à livrer est horodaté.

3. Procédé (100) selon l'une quelconque des revendications précédentes, dans lequel chaque message à livrer est un message relatif à un événement ayant eu lieu dans l'infrastructure informatique (200).

4. Procédé (100) selon l'une quelconque des revendications précédentes, dans lequel l'étape (102) de calcul de la signature est réalisée à l'aide d'un algorithme de hachage.

5. Procédé (100) selon l'une quelconque des revendications précédentes, comprenant en outre, à réception de la consigne de stockage par le serveur (202-1, 202-2), une étape (1071) de stockage par le serveur (202-1, 202-2), du message reçu sur un dispositif de stockage (205) de l'infrastructure informatique (200).

6. Procédé (100) selon l'une quelconque des revendications précédentes, comprenant en outre, à réception de la consigne de transmission par le serveur (202-1, 202-2), une étape (1072) de transmission par le serveur (202-1, 202-2) du message reçu à un composant tiers (206) de l'infrastructure informatique (200).

7. Procédé (100) selon l'une quelconque des revendications précédentes, comprenant en outre, à réception de la consigne de suppression par le serveur (202-1, 202-2), une étape (1081) de suppression par le serveur (202-1, 202-2), du message reçu et de la signature calculée.

8. Procédé (100) selon l'une quelconque des revendications précédentes, comprenant en outre une étape (109) d'effacement d'au moins une partie de la base de données de signatures (204) à intervalle régulier.

9. Infrastructure informatique (200) avec une gestion de la livraison de messages, comportant au moins un composant émetteur (201) et au moins une pluralité de serveurs destinataires (202-1, 202-2), l'infrastructure informatique (200) étant **caractérisée en ce qu'**elle comporte en outre au moins un composant de synchronisation (203) et au moins une base de données de signatures (204), le composant émetteur (201) étant configuré pour envoyer simultanément au moins un message à chaque serveur (202-1, 202-2) de la pluralité de serveurs destinataires, chaque message des au moins un message étant associé via une information relative à son origine, à un composant émetteur (201) donné devant envoyer le message et est associé via une information relative à sa destination, à une pluralité de serveurs destinataires donnée auxquels le message doit être envoyé, chaque serveur (202-1, 202-2) de la pluralité de serveurs étant configuré pour, à réception d'un message envoyé par le composant émetteur (201), stocker le message reçu dans sa mémoire et calculer une signature propre au message reçu, la signature calculée étant identique pour chaque serveur (202-1, 202-2) de la pluralité de serveurs destinataires, puis pour envoyer la signature calculée au composant de synchronisation (203), le composant de synchronisation (203) étant configuré pour recevoir chaque signature envoyée par un serveur (202-1, 202-2) de la pluralité de serveurs destinataires, pour interroger la base de données de signatures (204) pour déterminer si chaque signature reçue est stockée dans la base de données de signatures (204), pour stocker dans la base de données de signatures (204) chaque signature reçue non stockée dans la base de données de signatures (204), pour envoyer une consigne de stockage ou de transmission à chaque serveur (202-1, 202-2) ayant envoyé une signature non stockée dans la base de données de signatures (204) et pour envoyer une consigne de suppression à chaque serveur (202-1, 202-2) ayant envoyé une signature stockée dans la base de données de signatures (204).

10. Infrastructure informatique (200) selon la revendication 9, dans laquelle le composant de synchronisation (203) est un serveur distinct de chaque serveur (202-1, 202-2) de la pluralité de serveurs destinataires ou comporte pour chaque serveur (202-1, 202-2) de la pluralité de serveurs destinataires, un module de synchronisation compris dans le serveur (202-1, 202-2), chaque module de synchronisation étant configuré pour communiquer avec les autres modules de synchronisation du composant de synchronisation (203).

11. Infrastructure informatique (200) selon l'une quelconque des revendications 9 ou 10, comprenant en outre un dispositif de stockage (205), chaque serveur (202-1 , 202-2) de la pluralité de serveurs destinataires étant en outre configuré pour stocker la signature calculée sur le dispositif de stockage (205) à réception d'une consigne de stockage envoyée par le composant de synchronisation (203).

12. Infrastructure informatique (200) selon l'une quelconque des revendications 9 à 11, comprenant en outre un composant tiers (206), chaque serveur (202-1, 202-2) de la pluralité de serveurs destinataires étant en outre configuré pour transmettre le message reçu au composant tiers (206) à réception d'une consigne de transmission envoyée par le composant de synchronisation (203).

13. Infrastructure informatique (200) selon l'une quelconque des revendications 9 à 12, dans laquelle chaque serveur (202-1, 202-2) de la pluralité de serveurs destinataires étant en outre configuré pour supprimer le message reçu et la signature calculée à réception d'une consigne de suppression envoyée par le composant de synchronisation (203).

## Patentansprüche

1. Verfahren (100) zur Verwaltung der Zustellung von Nachrichten, wobei jede Nachricht über eine Information bezüglich ihres Ursprungs einer bestimmten Senderkomponente (201) zugeordnet ist, die die Nachricht senden soll, und über eine Information bezüglich ihres Empfängers einer bestimmten Vielzahl von Empfängerservern zugeordnet ist, an die die Nachricht gesendet werden soll, in einer IT-Infrastruktur (200), **dadurch gekennzeichnet, dass** es für jede zuzustellende Nachricht die folgenden Schritte umfasst:
- Gleichzeitiges Senden (101) der Nachricht durch eine Senderkomponente (201) der IT-Infrastruktur (200) an jeden Server (202-1, 202-2) einer Vielzahl von Empfängerservern der IT-Infrastruktur (200);
- Für jeden Server (202-1, 202-2) aus der Vielzahl von Empfängerservern, der die gesendete Nachricht empfangen und die empfangene Nachricht in seinem Speicher gespeichert hat:
∘ Berechnung (102) einer eigenen Signatur der empfangenen Nachricht durch den Server (202-1, 202-2), wobei die berechnete Signatur für jeden Server (202-1, 202-2) identisch ist; zwischen 1 und 20 Gew.-% einer ungesättigten Säure oder eines ungesättigten Anhydrids;
∘ Senden (103) der berechneten Signatur durch den Server (202-1, 202-2) an eine Synchronisationskomponente (203);
∘ Empfangen (104) der gesendeten Signatur und Abfragen (105) einer Signaturdatenbank (204) durch die Synchronisationskomponente (203):
▪ Wenn eine erste Bedingung (C1), dass die empfangene Signatur nicht in der Signaturdatenbank (204) gespeichert ist, erfüllt ist, Speichern (106) der empfangenen Signatur in der Signaturdatenbank (204) und Senden (107) einer Anweisung zum Speichern oder Übertragen der empfangenen Nachricht an den Server (202-1, 202-2) durch die Synchronisationskomponente (203);
▪ Andernfalls Senden (108) einer Anweisung zum Löschen der empfangenen Nachricht und der berechneten Signatur durch die Synchronisationskomponente (203) an den Server (202-1, 202-2).

2. Verfahren (100) nach Anspruch 1, bei dem jede zu liefernde Nachricht mit einem Zeitstempel versehen wird.

3. Verfahren (100) nach einem der vorhergehenden Ansprüche, bei dem jede zu liefernde Nachricht eine Nachricht ist, die sich auf ein Ereignis bezieht, das in der IT-Infrastruktur (200) stattgefunden hat.

4. Verfahren (100) nach einem der vorhergehenden Ansprüche, bei dem der Berechnungsschritt (102) der Signatur mithilfe eines Hash-Algorithmus durchgeführt wird.

5. Verfahren (100) nach einem der vorhergehenden Ansprüche, das außerdem bei Empfang der Speicheranweisung durch den Server (202-1, 202-2) einen Schritt (1071) des Speicherns der empfangenen Nachricht durch den Server (202-1, 202-2) auf einer Speichervorrichtung (205) der IT-Infrastruktur (200) umfasst.

6. Verfahren (100) nach einem der vorhergehenden Ansprüche, das bei Empfang der Übertragungsanweisung durch den Server (202-1, 202-2) außerdem einen Schritt (1072) umfasst, in dem der Server (202-1, 202-2) die empfangene Nachricht an eine Drittkomponente (206) der IT-Infrastruktur (200) weiterleitet.

7. Verfahren (100) nach einem der vorhergehenden Ansprüche, das außerdem bei Empfang der Löschanweisung durch den Server (202-1, 202-2) einen Schritt (1081) des Löschens der empfangenen Nachricht und der berechneten Signatur durch den Server (202-1, 202-2) umfasst.

8. Verfahren (100) nach einem der vorhergehenden Ansprüche, das außerdem einen Schritt (109) zum Löschen von mindestens einem Teil der Signaturdatenbank (204) in regelmäßigen Abständen umfasst.

9. IT-Infrastruktur (200) mit einer Verwaltung der Nachrichtenzustellung, die mindestens eine Senderkomponente (201) und mindestens eine Vielzahl von Empfängerservern (202-1, 202-2) umfasst, wobei die IT-Infrastruktur (200) **dadurch gekennzeichnet ist, dass** sie ferner mindestens eine Synchronisationskomponente (203) und mindestens eine Signaturdatenbank (204) umfasst, wobei die Senderkomponente (201) so konfiguriert ist, dass sie gleichzeitig mindestens eine Nachricht an jeden Server (202-1, 202-2) der Vielzahl von Empfängerservern sendet, wobei jede der mindestens einen Nachricht über eine Information bezüglich ihres Ursprungs einer bestimmten Senderkomponente (201) zugeordnet ist, die die Nachricht senden soll, und über eine Information bezüglich ihres Ziels einer bestimmten Vielzahl von Empfängerservern zugeordnet ist, an die die Nachricht gesendet werden soll, wobei jeder Server (202-1, 202-2) der Vielzahl von Servern so konfiguriert ist, dass er bei Empfang einer von der Senderkomponente (201) gesendeten Nachricht, die empfangene Nachricht in seinem Speicher speichert und eine eigene Signatur für die empfangene Nachricht berechnet, wobei die berechnete Signatur für jeden Server (202-1, 202-2) der Vielzahl von Empfängerservern identisch ist, und dann die berechnete Signatur an die Synchronisationskomponente (203) sendet, wobei die Synchronisationskomponente (203) so konfiguriert ist, dass sie jede von einem Server (202-1, 202-2) der Vielzahl von Empfängerservern gesendete Signatur empfängt, um die Signaturdatenbank (204) abzufragen, um zu bestimmen, ob jede empfangene Signatur in der Signaturdatenbank (204) gespeichert ist, um jede empfangene Signatur, die nicht in der Signaturdatenbank (204) gespeichert ist, in der Signaturdatenbank (204) zu speichern, um eine Speicher- oder Übertragungsanweisung an jeden Server (202-1, 2022) zu senden, der eine nicht in der Signaturdatenbank (204) gespeicherte Signatur gesendet hat, und um eine Löschanweisung an jeden Server (202-1, 202-2) zu senden, der eine in der Signaturdatenbank (204) gespeicherte Signatur gesendet hat.

10. IT-Infrastruktur (200) nach Anspruch 9, bei der die Synchronisationskomponente (203) ein Server ist, der von jedem Server (202-1, 202-2) der Vielzahl von Empfängerservern getrennt ist, oder für jeden Server (202-1, 202-2) der Vielzahl von Empfängerservern ein Synchronisationsmodul aufweist, das in dem Server (202-1, 202-2) enthalten ist, wobei jedes Synchronisationsmodul so konfiguriert ist, dass es mit den anderen Synchronisationsmodulen der Synchronisationskomponente (203) kommuniziert.

11. IT-Infrastruktur (200) nach einem der Ansprüche 9 oder 10, ferner umfassend eine Speichervorrichtung (205), wobei jeder Server (202-1, 202-2) der Vielzahl von Empfängerservern ferner so konfiguriert ist, dass er die berechnete Signatur auf der Speichervorrichtung (205) speichert, wenn er einen von der Synchronisationskomponente (203) gesendeten Speicherbefehl empfängt.

12. IT-Infrastruktur (200) nach einem der Ansprüche 9 bis 11, die außerdem eine Drittkomponente (206) umfasst, wobei jeder Server (202-1, 202-2) der Vielzahl von Empfängerservern außerdem so konfiguriert ist, dass er bei Empfang einer von der Synchronisationskomponente (203) gesendeten Übertragungsanweisung die empfangene Nachricht an die Drittkomponente (206) weiterleitet.

13. IT-Infrastruktur (200) nach einem der Ansprüche 9 bis 12, bei der jeder Server (202-1, 202-2) aus der Vielzahl von Empfängerservern zusätzlich so konfiguriert ist, dass er die empfangene Nachricht und die berechnete Signatur bei Empfang eines von der Synchronisationskomponente (203) gesendeten Löschbefehls löscht.

## Claims

1. A method (100) for managing delivery of messages, each message being associated, via information relating to its origin, with a given emitting component (201) that is to send the message and is associated, via information relating to its destination, with a plurality of given destination servers to which the message is to be sent, in a computing infrastructure (200), **characterised in that** it includes the following steps for each message to be delivered:
- Simultaneously sending (101) the message by an emitting component (201) of the computing infrastructure (200), to each server (202-1, 202-2) of a plurality of destination servers of the computing infrastructure (200);
- For each server (202-1, 202-2) of the plurality of destination servers having received the message sent and having stored the message received in its memory:
∘ Calculating (102), by the server (202-1, 202-2), a signature specific to the message received, the signature calculated being identical for each server (202-1, 202-2);
∘ Sending (103), by the server (202-1, 202-2), the signature calculated to a synchronisation component (203);
∘ Receiving (104) the signature sent and querying (105) a signature database (204) by the synchronisation component (203):
▪ If a first condition (C1) according to which the signature received is not stored in the signature database (204) is verified, storing (106) the signature received in the signature database (204) and sending (107) an instruction to store or transmit the message received to the server (202-1, 202-2) by the synchronisation component (203);
▪ Otherwise, sending (108), by the synchronisation component (203), an instruction to delete the message received and the signature calculated to the server (202-1, 202-2).

2. The method (100) according to claim 1, wherein each message to be delivered is time-stamped.

3. The method (100) according to any of the preceding claims, wherein each message to be delivered is a message relating to an event which has taken place in the computing infrastructure (200).

4. The method (100) according to any of the preceding claims, wherein the step (102) of calculating the signature is performed using a hash algorithm.

5. The method (100) according to any of the preceding claims, further comprising, upon reception of the storage instruction by the server (202-1, 202-2), a step (1071) of storing, by the server (202-1, 202-2), the message received on a storage device (205) of the computing infrastructure (200).

6. The method (100) according to any of the preceding claims, further comprising, upon reception of the transmission instruction by the server (202-1, 202-2), a step (1072) of transmitting, by the server (202-1, 202-2), the message received to a third-party component (206) of the computing infrastructure (200).

7. The method (100) according to any of the preceding claims, further comprising, upon reception of the delete instruction by the server (202-1, 202-2), a step (1081) of deleting, by the server (202-1, 202-2), the message received and the signature calculated.

8. The method (100) according to any of the preceding claims, further comprising a step (109) of erasing at least one part of the signature database (204) at regular intervals.

9. A computing infrastructure (200) with message delivery management, including at least one emitting component (201) and at least one plurality of destination servers (202-1, 202-2), the computing infrastructure (200) being **characterised in that** it further includes at least one synchronisation component (203) and at least one signature database (204), the emitting component (201) being configured to simultaneously send at least one message to each server (202-1, 202-2) of the plurality of destination servers, each message of the at least one message being associated, via information relating to its origin, with a given emitting component (201) that is to send the message and is associated, via information relating to its destination, with a given plurality of destination servers to which the message is to be sent, each server (202-1, 202-2) of the plurality of servers being configured in order to, upon reception of a message sent by the emitting component (201), store the message received in its memory and calculate a signature specific to the message received, the signature calculated being identical for each server (202-1, 202-2) of the plurality of destination servers, to send the signature calculated to the synchronisation component (203), the synchronisation component (203) being configured to receive each signature sent by a server (202-1, 202-2) of the plurality of destination servers, to query the signature database (204) to determine whether each signature received is stored in the signature database (204), to store, in the signature database (204), each signature received not stored in the signature database (204), to send a store or transmit instruction to each server (202-1, 2022) having sent a signature not stored in the signature database (204) and to send a delete instruction to each server (202-1, 202-2) having sent a signature stored in the signature database (204).

10. The computing infrastructure (200) according to claim 9, wherein the synchronisation component (203) is a server distinct from each server (202-1, 202-2) of the plurality of destination servers or includes, for each server (202-1, 202-2) of the plurality of destination servers, a synchronisation module included in the server (202-1, 202-2), each synchronisation module being configured to communicate with the other synchronisation modules of the synchronisation component (203).

11. The computing infrastructure (200) according to any of claims 9 or 10, further comprising a storage device (205), each server (202-1, 202-2) of the plurality of destination servers being further configured to store the signature calculated on the storage device (205) upon reception of a storage instruction sent by the synchronisation component (203).

12. The computing infrastructure (200) according to any of claims 9 to 11, further comprising a third-party component (206), each server (202-1, 202-2) of the plurality of destination servers being further configured to transmit the message received to the third-party component (206) upon reception of a transmission instruction sent by the synchronisation component (203).

13. The computing infrastructure (200) according to any of claims 9 to 12, wherein each server (202-1, 202-2) of the plurality of destination servers is further configured to delete the message received and the signature calculated upon reception of a delete instruction sent by the synchronisation component (203).
